# EUROPÄISCHE PATENTANMELDUNG

(11) **EP 1 630 514 A1**
(43) Veröffentlichungstag der Anmeldung: **01.03.2006**
(21) Anmeldenummer: 04019425.0
(22) Anmeldetag: 16.08.2004
(51) Int. Cl.: F28F 1/22, F25B 39/02, C09J 5/00, B05C 5/02

(54) **Verfahren zum Befestigung eines Rohrs an einer Platte**

(71) Anmelder: Isocoll Chemie GmbH, 86720 Nördlingen (DE)
(72) Erfinder: Gerlinger, Ulrich, 86720 Nördlingen (DE); Brunckhorst, Michael R., 63679 Schotten (DE)
(74) Vertreter: Strehl Schübel-Hopf & Partner

(57) **Zusammenfassung**

Zur Herstellung eines Wärmetauscherelements, beispielsweise für ein Kühlelement, wird auf eine Kühlschlange **10** mittels einer durchgehende Schicht eines wärmeleitenden Klebstoffs **13** aufgetragen. Anschließend wird die Platine **14** des Kühlgeräts auf die Kühlschlange **10** aufgedrückt, wobei diese abgeflacht wird und ein Teil der Klebstoffschicht in die Zwickelbereiche zwischen der Kühlschlange **10** und der Platine **14** verdrängt wird und dort wulstartige Klebstoffschnüre **15** bildet, die die Festigkeit der Verbindung bedingen und den Wärmeübergang verbessern.

## Beschreibung

Kälte-, Klima-, Heizungs- und Lüftungsgeräte verwenden Wärmeübertrager, bei denen ein das Kühl- oder Heizmedium führendes Rohr an einer die Wärme abgebenden Platine fixiert ist.

Sind die Werkstoffe von Platine und Rohr miteinander verschweißbar, so wird durch die Verschweißung ein guter Wärmeübergang erreicht. Bei unterschiedlichen Werkstoffen kommt eine Fixierung durch Verkleben, Verpressen oder mechanische Befestigungselemente wie Schrauben oder Clipse in Betracht.

Zur Verbesserung des Wärmeübergangs ist es auch bekannt, die das Kühl- oder Heizmedium führende, häufig mäanderartig gestaltete Rohrleitung in einer entsprechend geformten Rille der Platte anzuordnen und/oder zwischen den Teilen ein zusätzliches Wärmeübergangsmedium anzuordnen.

Aus DE 33 08 329 C3 ist ein Verfahren zur Herstellung eines Wärmeübertragers für ein Kühlgerät bekannt, gemäß dem ein Klebstoff in mehreren parallelen Spuren auf eine Platine aufgetragen wird, woraufhin eine mäanderförmig gebogene Kühlschlange so aufgelegt wird, daß ihre Längsbahnen senkrecht zu den Klebstoffspuren verlaufen. Von den Kreuzungsstellen aus soll sich der Klebstoff durch Kapillarwirkung längs der Kühlschlange ausbreiten, um eine über deren Länge zusammenhängende Klebeschicht zu erhalten.

Abgesehen davon, daß bei diesem Verfahren mehr Klebstoff eingesetzt als zur Befestigung der Kühlschlange ausgenutzt wird, muß der Klebstoff beim Auftragen genügend dünnflüssig sein, um die gewünschte Kapillarausbreitung zu erreichen. Andererseits soll sich der Klebstoff möglichst rasch verfestigen lassen, um den Zeitbedarf für den gesamten Herstellprozeß gering zu halten.

In DE 39 34 479 C2 wird der Einsatz von Klebstoff zur Fixierung einer Kühlschlange an einer Platine wegen der hohen Anforderungen an den Klebstoff und den daraus resultierenden Kosten abgelehnt. Dort wird die Kühlschlange an der Platine angelötet, wobei vorzugsweise auf die gesamte Plattenoberfläche eine Lötschicht aufgetragen und das Rohr anschließend auf diese aufgebracht wird. Zur Vergrößerung der Wärmeübergangsfläche wird mit einem flachgedrückten oder einem Vierkant-Rohr gearbeitet.

Aus DE 30 40 463 A1 ist es bekannt, einen Heizrohrkörper an einer Backofenmuffel dadurch anzubringen, daß zwischen dem Rohr und der zu beheizenden Fläche eine durchgehende Klebstoffschicht vorgesehen wird, die durch Aufeinanderpressen aus dem Berührungsbereich verdrängt wird und längs des Rohr seitliche Verbindungsnähte bildet.

Der Erfindung liegt die Aufgabe zugrunde, ein Verfahren anzugeben, mit dem sich ein Rohr an einer Platte, insbesondere eine Kühlschlange an der Platine eines Kühlgerätes, in einfacher Weise so anbringen läßt, daß bei sparsamem Klebstoffeinsatz ein guter Wärmeübergang erreicht wird.

Die Lösung dieser Aufgabe gelingt mit dem in Anspruch 1 angegebenen Verfahren.

Erfindungsgemäß wird mit einem vorzugsweise wärmeleitenden Klebstoff gearbeitet, der auf vorzugsweise das Rohr aufgetragen wird, wobei anschließend Platte und Rohr zusammengebracht werden, vorzugsweise die Platte auf das mit dem Klebstoff beschichtete Rohr aufgedrückt wird.

Bei der dieser Vorgehensweise ergeben sich folgende Vorteile:
(a) Die gesamte eingesetzte Klebstoffmenge wird für die Verbindung zwischen Rohr und Platte genutzt.
(b) Eine zusammenhängende Klebeschicht läßt sich weitgehend unabhängig von den Fließeigenschaften des Klebstoffs sicherstellen.
(c) Es läßt sich gerade so viel Klebstoff auftragen, daß dieser beim Aufdrücken der Platte aus dem unmittelbaren Kontaktbereich verdrängt wird und in den Zwickelbereichen zwischen Rohr und Platte seitliche Klebstoffschnüre bildet, die die Haftung bewirken und zum Wärmeübergang beitragen.
(d) Ein für die Festigkeit der Verbindung günstiger Druck läßt sich leicht durch Druck auf die gesamte Platte erzeugen, wobei die Wirkung vom Gewicht der Platte selbst unterstützt wird.
(e) Eine zwischen Rohr und Platte durchgehend aufgetragene Klebstoffschicht ist nicht nur für die Befestigung und den Wärmeübergang günstig, sondern verhindert auch die Entstehung von Hohlräumen und damit das Eindringen von Isolierschaum oder sonstigen Isoliermaterialien im Zuge der Herstellung. Hohlräume sind auch deshalb schädlich, weil sich in Ihnen Kondensat und Eis bilden können, wobei insbesondere Eis die Rohrleitung von der Platte trennen und damit den Wärmeübergang und die Effizienz des Systems im Lauf der Zeit stetig verringern kann.
(f) Das Aufbringen des Klebstoffs kann ohne zeitliche Nähe vorher separat und der Fügeprozeß später ohne weitere Aktivierung mittels Wärme, Energie oder chemische Substanzen erfolgen. Andererseits ist es auch möglich, die Festigkeit des Klebstoffs nach dem Fügevorgang durch Wärme, Energie oder chemische Substanzen zu erhöhen.
(g) Der Klebstoff gestattet die Verbindung unterschiedlicher Materialien und bewirkt einen Ausgleich von Formtoleranzen.

Zur Erhöhung des Wärmeübergangs wird vorzugsweise mit einem abgeflachten Rohr gearbeitet. Die Abflachung kann vor dem Auftrag des Klebstoffs erfolgen, was insofern günstig ist, als sich die gewünschte Klebstoffmenge leichter auf das Rohr auftragen läßt. Wird dagegen das Rohr beim Aufdrücken der Platte abgeflacht, so läßt sich ein Arbeitsschritt einsparen. Bei dieser zweiten Vorgehensweise ergibt sich der weitere Vorteil, daß das Rohr und die Platte auch bei anfänglichen Formabweichungen in engen Kontakt gebracht werden, was für den Wärmeübergang von Vorteil ist.

Vorzugsweise wird mit einem Klebstoff gearbeitet, der durch Abkühlung verstrammt, jedoch dauerplastisch und dauerklebrig bleibt. Der günstigste Grad der Dauerplastizität läßt sich über die Rezeptur des Klebstoffs einstellen. Dadurch kann der Zeitpunkt der Verstrammung so eingestellt werden, daß die Verfestigung unmittelbar nach dem Aufdrücken der Platte oder auch später ― ohne eigenen Aktivierungsschritt und ohne Nachbehandlung des Klebstoffs oder der zu fügenden Bauteile ― erfolgt.

Die dauerplastische Eigenschaft des Klebstoffs ermöglicht es auch, weitere Bearbeitungsschritte, etwa des Abflachen des Rohrs nach dem Klebstoffauftrag, durchzuführen. Bei richtiger Einstellung der Dauerplastizität wird eine Soforthaftung zwischen Rohr und Platte mit anschließendem Aufbau der Endfestigkeit der Verbindung erreicht.

Ein Ausführungsbeispiel der Erfindung wird nachstehend anhand der Zeichnung erläutert. In der Zeichnung zeigt
Fig. 1 eine Vorrichtung zum Auftragen von Klebstoff auf eine Kühlschlange und
Fig. 2 einen vergrößerten Querschnitt durch die mittels des Klebstoffs an einer Platine befestigte Kühlschlange.

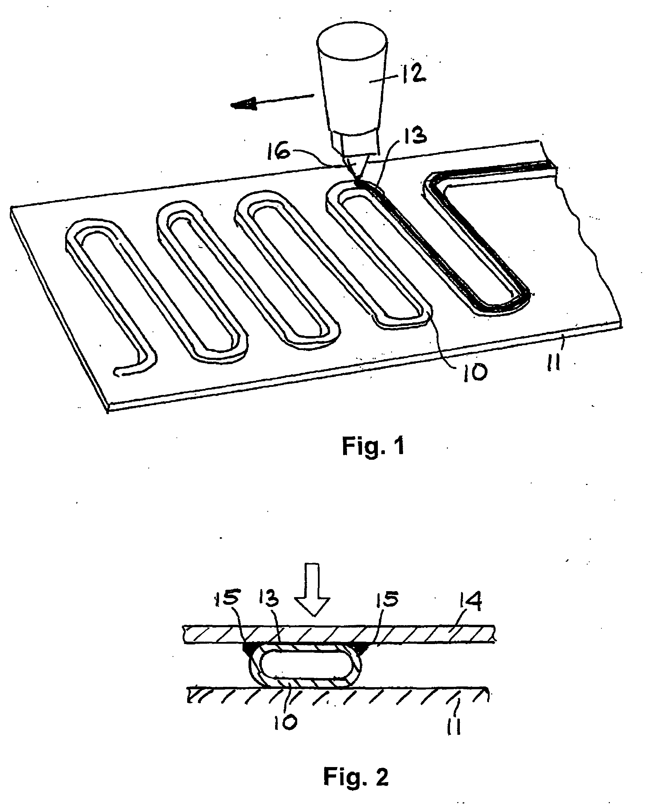

Gemäß Fig. 1 wird die aus einem mäanderförmig vorgebogenen im Querschnitt kreisrunden oder ovalen Metallrohr bestehende Kühlschlange 10 auf eine Arbeitsfläche 11 aufgelegt und dort mittels Halterungen festgelegt. Auf die Oberseite der Kühlschlange 10 wird ein Klebstoff 13 mittels einer roboterbetriebenen, mit einer (nicht gezeigten) Faßschmelzanlage verbundenen Auftragvorrichtung 12 als kontinuierlicher Streifen aufgetragen.

Bei dem Klebstoff handelt es sich um eine ein- oder zweikomponentige Masse, die entweder dauerhaft viskoelastisch ist oder eher viskos und durch nachträgliches Vernetzen, Vulkanisieren, Erkalten oder Trocknen in einen viskoelastischen Zustand überführbar ist.

Geeignet ist beispielsweise ein Butylkleber, der zur Erzielung einer guten Wärmeleitfähigkeit mit einem Metallpulver gefüllt ist.

Für Kühlgeräte wird ein Klebstoff mit beispielsweise folgender Zusammensetzung verwendet:

| | |
|---|---|
| 20~33 Gew-% | Synthesekautschuk mit Weichmacher, |
| 28~35 Gew-% | CaCO_{3.} |
| 7~15 Gew-% | Ruß, |
| 8~15 Gew-% | Metallpulver, |
| 10~15 Gew-% | Kunstharz. |

Der Klebstoff ist vorzugsweise lösungsmittelfrei, wasserfrei, selbstklebend und schwundfrei, gegenüber Wasser stabil und temperaturwechselbeständig. Er weist vorzugsweise eine Wasseraufnahme von weniger als 1 Gew-% auf und hat eine Dauergebrauchsfestigkeit zwischen -40 °C und + 10 °C.

Aus den oben angegebenen Bestandteilen wird der Klebstoff in einem Kneter zubereitet und der Faßschmelzanlage zugeführt. Durch Temperaturerhöhung auf über 120 °C wird er genügend fließfähig zum Ausbringen und Auftragen auf die Kühlschlange.

Auf die in Fig. 1 gezeigte, an ihrer Oberseite mit dem Klebstoff 13 versehene metallische Kühlschlange 10 wird eine beispielsweise aus Aluminium bestehende Platine 14 aufgedrückt, wobei der auf die Platine ausgeübte Druck so groß ist, daß die Kühlschlange flach gedrückt wird. Bei diesem Vorgang wird ein Teil des (in entsprechender Menge aufgetragenen) Klebstoffs 13 zu beiden Seiten der Kühlschlange 10 hin verdrängt und bildet, wie in Fig. 2 veranschaulicht, in den entstehenden Zwickelbereichen zwischen Kühlschlange 10 und Platine 14 Klebstoffschnüre 15, die die Festigkeit der Verbindung ausmachen und den Wärmeübergangsquerschnitt vergrößern. Vorzugsweise ist der beim Anpressen aufgebrachte Druck so hoch, daß die Kühlschlange 10 in unmittelbaren metallischen Kontakt mit der Platine 14 gebracht wird.

Anschließend wird die Anordnung durch Isolierschaum verschlossen. Dabei ist es wichtig, daß die Verbindung zwischen Kühlschlange 10 und Platine 14 durchgehend ausgebildet worden ist. Dadurch wird vermieden, daß Isolierschaum zwischen Kühlschlange und Platine gelangt und in diesem Zeitpunkt, in dem die Klebstoffverbindung noch nicht ihre endgültige Festigkeit erreicht hat, zu einer Ablösung der Kühlschlange von der Platine führt.

Die oben beschriebene, in diesem Fall durch Aufdrücken der Platine 14 bewirkte Abflachung der Kühlschlange 10 ist nicht unbedingt erforderlich. Es ist auch möglich, die kreisförmige Querschnittsform der Kühlschlange beizubehalten oder ein Rohrmaterial mit einem abgeflachten oder sonstigen Querschnitt zu verwenden.

Der in Fig. 1 gezeigte Kopf der Auftragvorrichtung 12 wird so angetrieben, daß ihre Ausbringdüse 16 der Mäanderform der Kühlschlange 10 nachgeführt wird. Diese Steuerung kann entweder dadurch erfolgen, daß die Kühlschlange nach einem vorgegebenen Muster gebogen und das Auftragsgerät nach dem gleichen Muster NC-gesteuert wird; alternativ ist es auch möglich, die Auftragsvorrichtung 12 durch optische Abtastung (Bilderkennung) der tatsächlichen Form der Kühlschlange nachzuführen.

Statt des beschriebenen Auftrags auf die Kühlschlange kann der Klebstoff auch längs einem dem Verlauf der Kühlschlange entsprechenden Muster ― wiederum mittels eines NC-gesteuerten Roboters ― auf die Platte aufgebracht werden. Ferner kann der Klebstoff auch als vorgefertigter Profilstreifen aufgetragen werden. Als weitere Alternative ist es möglich, einen Zweikomponenten-Klebstoff einzusetzen und von diesem eine Komponente auf das Kühlschlange 10 und die andere auf die Platte 14 aufzutragen.

Anstelle der gezeigten Mäanderform kann auch mit mehreren parallelen Rohabschnitten oder mit einem sonstigen Verlauf eines zusammenhängenden Rohrs gearbeitet werden.

## Patentansprüche

1. Verfahren zum Befestigen eines Rohrs (10) an einer Platte (14) mittels eines Klebstoffs (13), **dadurch gekennzeichnet, daß** der Klebstoff (13) auf das Rohr und/oder dem Verlauf des Rohrs entsprechend streifenartig auf die Platte (14) aufgetragen und anschließend die Platte (14) und das Rohr (10) zusammengebracht werden.

2. Verfahren nach Anspruch 1, wobei die Platte (14) auf das mit dem Klebstoff (13) versehene Rohr (10) aufgedrückt wird.

3. Verfahren nach Anspruch 2, wobei das Rohr (10) beim Zusammenpressen mit der Platte (14) abgeflacht wird.

4. Verfahren nach Anspruch 1 oder 2, wobei der Klebstoff (13) auf eine abgeflachte Seite des Rohrs (10) aufgetragen wird.

5. Verfahren nach einem der vorhergehenden Ansprüche, wobei Rohr (10) und Platte (14) derart aufeinander gepreßt werden, daß sie einander kontaktieren.

6. Verfahren nach einem der vorhergehenden Ansprüche, wobei eine solche Menge an Klebstoff (13) aufgetragen wird, daß sich in den Zwickelbereichen zwischen Rohr (10) und Platte (14) Klebstoffschnüre (15) ausbilden.

7. Verfahren nach einem der Ansprüche 1 bis 5, wobei der Klebstoff (13) in die Zwickelbereiche zwischen Platte (14) und dem daran vorfixierten Rohr (10) eingebracht wird.

8. Verfahren nach einem der vorhergehenden Ansprüche, wobei ein Zweikomponenten-Klebstoff (13) verwendet wird, von dem eine Komponente auf das Rohr (10) und die andere auf die Platte (14) aufgetragen wird.

9. Verfahren nach einem der vorhergehenden Ansprüche, wobei ein wärmeleitender Klebstoff (13) verwendet wird.

10. Verfahren nach einem der vorhergehenden Ansprüche, wobei das Rohr (10) vor dem Klebstoffauftrag mäanderförmig gebogen wird.

11. Verfahren nach einem der vorhergehenden Ansprüche, wobei der Klebstoff (13) als Pastenstrang mittels eines Roboters auf getragen wird.

12. Verfahren nach Anspruch 11, wobei der Roboter durch NC-Steuerung oder mittels Bilderkennung der Form des Rohrs (10) nachgeführt wird.

13. Verwendung des Verfahrens nach einem der vorhergehenden Ansprüche zur Befestigung einer Kühlschlange (10) an der Platine (14) eines Kühlgerätes.

14. Verwendung eines Butylklebers zum Fixieren eines Rohrs an einer Platte, insbesondere einer Kühlschlange (10) an der Platine (14) eines Kühlgerätes.

## Geänderte Patentansprüche

### Geänderte Patentansprüche gemäss Regel 86(2) EPÜ.

**1.** Verwendung eines Butylklebers (**13**) zum Befestigen einer Kühlschlange (**10**) an der Platine (**14**) eines Kühlgerätes.

**2.** Verwendung nach Anspruch 1, wobei der Kleber mit einem Metallpulver gefüllt ist.

**3.** Verfahren zum Befestigen einer Kühlschlange (**10**) an der Platine (**14**) eines Kühlgerätes mittels eines Butylklebers (**13**), **dadurch gekennzeichnet, daß** der Kleber (**13**) auf die Kühlschlange und/oder dem Verlauf der Kühlschlange entsprechend streifenartig auf die Platine (**14**) aufgetragen und anschließend die Platine (**14**) und die Kühlschlange (**10**) zusammengebracht werden.

**4.** Verfahren nach Anspruch 3, wobei die Platine (**14**) auf die mit dem Kleber (**13**) versehene Kühlschlange (**10**) aufgedrückt wird.

**5.** Verfahren nach Anspruch 4, wobei die Kühlschlange (**10**) beim Zusammenpressen mit der Platine (**14**) abgeflacht wird.

**6.** Verfahren nach Anspruch 5, wobei der Kleber (**13**) auf eine abgeflachte Seite der Kühlschlange (**10**) aufgetragen wird.

**7.** Verfahren nach einem der Ansprüche 3 bis 6, wobei Kühlschlange **(10)** und Platine **(14)** derart aufeinander gepreßt werden, daß sie einander kontaktieren.

**8.** Verfahren nach einem der Ansprüche 3 bis 7, wobei eine solche Menge an Kleber (**13**) aufgetragen wird, daß sich in den Zwickelbereichen zwischen Kühlschlange **(10)** und Platine **(14)** Kleberschnüre **(15)** ausbilden.

**9.** Verfahren nach einem der Ansprüche 5 bis 7, wobei der Kleber (**13**) in die Zwickelbereiche zwischen der Platine (**14**) und der daran vorfixierten Kühlschlange (**10**) eingebracht wird.

**10.** Verfahren nach einem der Ansprüche 3 bis 9, wobei der Kleber ein Zweikomponenten-Kleber (**13**) ist, von dem eine Komponente auf die Kühlschlange (**10**) und die andere auf die Platine (**14**) aufgetragen wird.

**11.** Verfahren nach einem der Ansprüche 3 bis 10, wobei die Kühlschlange **(10)** vor dem Kleberauftrag mäanderförmig gebogen wird.

**12.** Verfahren nach einem der Ansprüche 3 bis 11, wobei der Kleber (**13**) als Pastenstrang mittels eines Roboters aufgetragen wird.

**13.** Verfahren nach Anspruch 12, wobei der Roboter durch NC-Steuerung oder mittels Bilderkennung der Form der Kühlschlange (**10**) nachgeführt wird.
